Europäisches Patentamt

European Patent Office

Office européen des brevets

(11) Publication number: **0 100 434**
**B1**

(12) **EUROPEAN PATENT SPECIFICATION**

(45) Date of publication of patent specification: **20.09.89**

(51) Int. Cl.⁴: **C 08 J 3/12,** C 08 L 21/00 //
B29B13/10

(21) Application number: **83106303.7**

(22) Date of filing: **28.06.83**

(54) Rubber powders and methods of producing and using rubber powders.

(30) Priority: **14.07.82 US 398162**

(43) Date of publication of application:
**15.02.84 Bulletin 84/07**

(45) Publication of the grant of the patent:
**20.09.89 Bulletin 89/38**

(84) Designated Contracting States:
**CH DE FR GB IT LI LU**

(56) References cited:
**FR-A-2 212 342**
**US-A-3 190 565**
**US-A-3 345 324**
**US-A-3 623 703**
**US-A-4 190 613**

**POLYMER SCIENCE: U.S.S.R., no. 6, 1974,
pages 1568-1571, Pergamon Press, Oxford, GB;
V.A. PANKRATOV et al.: "Effect of
pulverization on the molecular structure of
synthetic cis-polyisoprene"**

(73) Proprietor: **THE FIRESTONE TIRE & RUBBER
COMPANY
1200 Firestone Parkway
Akron, Ohio 44317 (US)**

(72) Inventor: **Böhm, Georg G. A.
1212 Sunset View Drive
Akron Ohio 44313 (US)**

(74) Representative: **Kraus, Walter, Dr. et al
Patentanwälte Kraus, Weisert & Partner
Thomas-Wimmer-Ring 15
D-8000 München 22 (DE)**

Courier Press, Leamington Spa, England.

EP 0 100 434 B1

**Description**

The invention relates to a direct method for producing unvulcanized rubber powder having an average particle size of less than 10 mm coated with at least one anti-tack agent.

The advantages of rubber powders in storage, handling and processing of rubber are many and have been long apparent. In such a form rubber can be easily handled and blended. Powders are easily adapted to such production techniques as injection molding and extrusion which is useful in making, for example, tires, cables, gaskets and hoses. The demonstrated or predicted advantages of rubber powder technology include energy savings, process automation and shear history reduction. Generally, however, this potential has yet to be realized because of the lack of convenient, efficient, and inexpensive techniques for making rubber powder.

Most of the activity in the rubber powder field has focused on material from emulsion polymers, particularly nitrile rubbers and emulsion SBR. A variety of techniques, including grinding, spray drying and coagulation of elastomer latices in the presence of anti-tack agents and/or surface active materials have been reported. See, for example, the following references:

1. T. R. Goshorn, A. H. Jorgenson, M. E. Woods, *Rubber World,* 161 (1), 66 (1969)

2. W. H. Whittington, M. E. Woods, paper presented at a meeting of The Rubber Division, American Chemical Society, Cleveland, Ohio, October, 1971.

3. M. W. Woods, R. P. Krosky, *Rubber Age,* 105 (4), 33 (1973).

4. M. E. Woods, R. J. Morsek, W. H. Whittington, *Rubber World,* 167 (6), 42 (1973).

5. P. L. Blerjie, *Rubber Chem. Technol.,* 48 (2), 254 (1975).

6. T. P. Abbot, W. M. Doane, C. R. Russell, *Rubber Age (N.Y.),* 105 (81), 43 (1973).

7. H. Widmer, P. Milner, *Rubber Age (N.Y.),* 106 (11), 41 (1974).

8. R. E. Dixon, E. B. Bagley, *J. Appl. Polym. Sci.* 19, 1491 (1975).

9. Chemische Werke Huls, British Patent 1,387,605 (March, 1975).

10. K. H. Nordsiek (to Chemische Werke Huls), Ger. Offen. 2,214,121 (September, 1973); Chem. Abstr. 80, 28193 r. (1974).

11. K. H. Nordsiek, G. Berk, *Polymer Age,* 6 (56), 60 (1975).

12. N. Doak, *Eur. Rubber J.* 156 (10), 52 (1974).

Patents have also been issued in the general area of rubber powder; see, for example, US—A—4 032 501 which described a method for producing rubber powders from hydrocarbon solution rubber, carbon black and foam inhibiting surfactants. Other patents dealing generally with this field include US—A—2 777 008, 3 245 945, 3 203 922, 3 060 145 and 3 251 798. US—A—3 345 324 discloses a method of preparing free-flowing unvulcanized rubber filler compositions wherein an allgomerated latex is mixed with an inert filler, the coagulation of the rubber particles in contact with the inert filler particles is completed, the precipitate from the aqueous phase is separated and the precipitate is dried. US—A—3 190 565 describes a method of grinding materials which are characterized by tackiness, elasticity and a tendency to agglomerate in a mechanical cutter or grinder which comprises the addition of polyolefin fines. US—A—4 190 613 describes a free-flowing rubber mixture which is stable against coalescence and cohesion comprising a vulcanizable rubber in powder form and a minor amount of an acrylonitrile polymer as a separating agent. Polymer Science: USSR no. 6, 1974, page 1569, lines 11—21 describes a method to form rubber powder at a temperature above the glass transition temperature of the rubber, which method comprises crushing of the rubber to a particle size of 0.25—5 mm with dusting agents e.g. carbon black to prevent agglomeration into a solid block.

The direct method for producing unvulcanized rubber powder of the present invention comprises first subdividing a direct method for producing substantially unvulcanized rubber powder having an average particle size of 0.1—10 mm which comprises first subdividing bale rubber into segments having a particle size of 0.2—20 cm and combining them with an anti-tack agent which is a rubber filler or reinforcing agent selected from the group consisting of carbon black, zinc oxide, fine particles of precipitated calcium carbonate, fine and hard clay particles, calcium silicate, silica, hydrated silica and finely divided phenolic resin, to form a homogenous aggregate which is then mixed under high shear conditions at a temperature above the glass transition temperature of the rubber for a time of 0.1—10 minutes and a temperature of 0—100°C, wherein said mixing occurs in a single machine that subjects said segments of 0.2—20 cm to high shear conditions with a mixing and plasticating cylinder and a mixing and plasticating rotor with passages therein, the shaft of said rotor being connected to a rotary drive outside said cylinder and the cylinder and the rotor being axially movable in relation to each other.

The anti-tack agent is used in an amount rendering the surface of the particle non-tacky; on a macrosale such an amount manifests itself as rendering the rubber powders resistant to agglomeration and cold flow. Thus the powders prepared according to this invention are free-flowing and do not require substantial post-blending shear to achieve acceptable filler dispersion.

An important aspect of this method is that the bale rubber is first subdivided in a premixing step into segments having a maximum particle size of less than 20 cm and combined with the anti-tack agent to form a homogeneous aggregate before it is subjected to mechanical action and high shear. Often the anti-tack agent used comprises a component to be later compounded with the rubber to make a vulcanizate such as carbon black, talc, silica, clay and the like.

2

EP 0 100 434 B1

It is a characteristic and advantage of the method of this invention that rubber powder is formed without the need of latex or solution steps. In other words, the powder is formed directly and mechanically from bale or slab rubber without the intervention of latex or solution procedures. It is also an advantage of this method that it is carried out at a temperature above the glass transition temperature of the rubber and thus does not require cryogenic techniques. Such techniques demand large investments of energy to maintain severely reduced temperatures.

This invention relates also to methods of using the rubber powders made by the methods of this invention, to cured rubber compositions obtained by the method of this invention, and to articles of manufacture made from the compounded powders.

The rubbers used in the present invention generally include elastomers of both the natural and synthetic type. Natural elastomers include Hevea and Guayala rubbers and other rubbers isolated from plant sources as well as blends thereof. Chemically modified natural rubbers such as hydrogenated, chlorinated and sulphonated natural rubbers can also be used.

Synthetic rubbers include a wide range of materials such as those designated in the ASTM standard recommended practice for rubber and rubber latice nomenclature; see ANSI/ASTM DY1418—79a. These include saturated, polymethylene synthetic rubbers such as those made from acrylates and alpha-olefin polymers, as well as related co-polymers such as ethylene propylene types (EPM or EPR), terpolymers or various types such as EPDM, perfloro rubber (FKM and FFKM), oxygenated rubbers containing oxygen in the polymer chain, such as those made from ethylene and propylene oxide (CO, ECO, and GPO types), the sulphur analogs thereof, phosphazene rubbers and silicone rubbers. Rubbers containing carbon, oxygen and nitrogen in the polymer chain such as the urethane types can also be used in the invention. Hydrogenated and other types of chemically treated synthetic rubbers are also useful, such as hydrogenated BR, chlorinated BR, bominated BR, etc. A particularly useful class of rubbers are the "R" class, which contain unsaturation in the main chain and include both natural rubber types and synthetic rubber types. These R class rubbers include the following:

| ABR | Acrylate-butadiene |
|---|---|
| BHR | Bromo-isobutene-isoprene |
| BR | Butadiene |
| CHR | Chloro-isobutene-isoprene |
| CR | Chloroprene |
| HR | Isobutene-isoprene |
| IR | Isoprene, synthetic |
| NBR | Nitrile-butadiene |
| NCR | Nitrile-chloroprene |
| NIR | Nitrile-isoprene |
| NR | Natural rubber |
| PBR | Pyridine-butadiene |
| PSBR | Pyridine-styrene-butadiene |
| SBR | Styrene-butadiene |
| SCR | Styrene-chloroprene |
| SIR | Styrene-isoprene rubbers |
| XSBR | Carboxylic-styrene-butadiene |
| XNBR | Carboxylic-nitrile-butadiene |

Both solution and emulsion prepared rubbers can be used in making the powders of this invention. Blends of two or more of the various rubber types noted may also be used. Non-limiting examples of such blends are SBR/NR (50/50), Guayule/Hevea (20/80), IR/hydrogenated BR (33/67), EPDM/BD (60/40), CHR/BHR

3

EP 0 100 434 B1

(35/65), etc.

The rubber used to make the powders of this invention is substantially non-vulcanized (i.e., substantially uncured or uncross-linked). This means that the rubber is not vulcanized at all or is vulcanized to such a low degree that it behaves as if it were not vulcanized, particularly with respect to its tack and facile processing properties. Such lightly vulcanized materials are sometimes said to be prevulcanized. Such prevulcanization can be effected by low levels of high energy radiation.

As noted above the particles which comprise the rubber powders of this invention are coated with an effective amount of an anti-tack agent. Tack is a well-known term referring to that property of rubber which causes it to adhere to itself and, in the case of small particles such as powders, agglomerate. Thus, an effective amount of an anti-tack agent in the context of this invention is that amount which prevents agglomeraton of the powder under the conditions of its formation and storage. Typically, this amount will be 10—30 parts anti-tack agent per 100 parts rubber (phr). Usually the amount of anti-tack agent will vary directly with the inherent tack of the rubber used to make the powder and inversely with the average size of the rubber particles comprising the powder since the rubber surface area will also vary inversely with particle size. Often 30—100 phr anti-tack agent is used.

While it is possible to use any material as an anti-tack agent which suppresses or eliminates tack interactions between the rubber particles comprising the powder of the invention, it is usually desirable to use a material that is ultimately to be incorporated in the final rubber compound. Convenient materials of this type are the well known rubber fillers or reinforcing agent such as carbon black, silica, talc, various clays and the like. These materials increase the hardness, stiffness, strength, and resistance to tear and abrasion of the vulanized rubber compound and include a wide range of carbon blacks, zinc oxide, fine particles of percipitated calcium carbonates, hard clays, hydrated silica compounds, such as calcium silicate and silicon dioxide and, in some specialized instances, organic materials such as finely divided phenolic resins. In certain instances abrasives such as pumice, tripoli and carborundum are used as filler components and can also be used as anti-tack agents in the powders of this invention. Similarly, in specialized applications, white and colored material such as mineral pigments and organic dyes may be useful. Specific examples include titanium dioxide, the aforementioned zinc oxide, zinc sulphide, iron oxide and various organic materials such as ultramarine blue. Other filler-type materials include whiting (byproduct calcium carbonate or ground limestone), barytes and materials such as highly reduced and blown asphalts. Generally, however, the anti-tack agent of choice is one of the well known carbon blacks which are used as fillers and reinforcing agents in rubber compounds intended for ultimate use in tire and rubber article manufacture.

The rubber powders produced according to the present invention are generally produced by direct mechanical means without the intervention of emulsions or solutions. That means that there is no need to go through a latex-forming or solution step as is used in many processes of the prior art. Similarly, cryogenic techniques are not used necessarily in making the powders of this invention. Thus, the powders of this invention are made by mechanical, non-solvent, non-emulsion, non-cryogenic; non-chemical treatment, non-special additive techniques.

The technique of the present invention for producing the rubber powders is by mechanical shearing of rubber and anti-tack agents under specified conditions of high shear, preceded by a premixing stage in which a homogenous aggregate of subdivided slab or baled rubber and anti-tack agent is formed. While it is not necessary to understand any theoretical concept or explanation of the invention to practice it, it may be interesting to consider a hypothetical analysis of the process. In this analysis any mixing process is considered to involve two simultaneous events. One, entails the shear-induced subdivision of the material and the other, its coalescence after subdivision. If the latter coalescence or agglomeration can be prevented by one means or another, the subdivided materials continue to be subdivided during mixing and a powder of increasing fineness results. It is possible to conceive of various coalescence-preventing techniques. One is cooling in which the material such as rubber becomes a rigid plastic whose surface ceases to be tacky. Another method of preventing coalescence of rubber particles would be to cover them with an anti-tack agent, a procedure somewhat analogous to the well-known technique of microencapsulation. In this instance, however, small particles of anti-tack agent are used to surround and prevent coalescence of the relatively larger rubber particles by acting as a barrier. Thus the absence of such substantial coalescence is achieved through the presence of small anti-tack particles on the rubber particle surface which produces, on a macroscale, free-flowing, non-agglomerating powder. Thus, if rubber is first subdivided into fine particles and, either simultaneously or shortly thereafer, these particles are covered with an anti-tack agent, such as carbon black, free-flowable rubber powder is formed.

According to this invention the bale or slab rubber from which the powder is to be made is first subdivided and more or less intimately mixed with anti-tack agent before the resulting homogeneous aggregate is subjected to mechanical action which affects the final subdivision of the rubber to particles of increasing fineness. Generally, this initial subdivision of the rubber is carried out so as to produce particles of an average size of 0.2 to 20 cm, say 0.5 to 10 cm, usually 0.75 to 5.0 cm. Subdivison initially can be carried out by any convenient technique such as low shear extrusion and chopping, rough grinding, cutting, stamping and the like. Simultaneously or subsequently, the anti-tack agent is combined with the initially subdivided rubber and mixing is carried out to provide a homogeneous aggregate. This homogeneous aggregate can then be processes directly and mechanically under conditions which progressively break

4

down the rubber particles to a size of less than about 1 cm. Generally, the resultant rubber powder has an average particle size of 0.01 to 20 mm, typically 0.1 to 10 mm. It should be noted that not all the anti-tack agent present in the rubber powder need be attached to the rubber particle surface. Free unassociated anti-tack agent may be present.

The aforesaid final subdivision of the bale or slab rubber/anti-tack agent (for example, filler) aggregate to the inventive powder is accomplished through the use of a mixing and plasticating machine, comprising a mixing and plasticating machine, comprising a mixing and plasticating cylinder and a mixing and plasticating rotor with passages therein, the shaft of said mixing and plasticating rotor being connected to a rotary drive outside said cylinder. The mixing and plasticating cylinder and the mixing and plasticating rotor are axially movable in relation to each other. By means of this relative axial motor of rotor and cylinder, the inside wall of the mixing and plasticating cylinder is scraped off by the mixing and plasticating rotor and the material in the cylinder is pressed through said passages at high shear and friction rates; abrasion may also occur during these processes.

A machine of this kind is described in US—A—3 623 703.

The machine described in US—A—3 623 703 accomplishes mixing and formation of the powders of this invention at controlled pressure, friction and shear conditions. The actual reduction of rubber particles to powder may occur by cutting, abrasion or shear-induced elongation and subsequent rupture of the particles or two or more of these in concert. Thus, one method of making the powders of this invention is wherein the mixing is accomplished by a machine for mixing rubber and other highly viscous materials that control pressure, friction and shear conditions, which comprises a mixing and plasticating cylinder and a mixing and plasticating rotor with aperture passages, the shaft of said mixing and plasticating rotor being connected to a rotary drive outside the mixing and plasticating cylinder, said mixing and plasticating rotor and said mixing and plasticating cylinder being axially movable in relation to each other, during said relative motion of said mixing and plasticating rotor and said mixing and plasticating cylinder, the internal wall area of said mixing and plasticating cylinder being scrapped off by said mixing and plasticating rotor and the contents (i.e., the rubber/anti-tack agent aggregate) of said mixing and plasticating being pressed through the passages of said mixing and plasticating rotor at friction and shear.

Generally, the direct mechanical conversion of bale rubber to rubber powder according to this invention occurs at ambient or slightly elevated temperatures (the elevation is usually the result of the mixing or related processes). These temperatures range from $-20-150°C$, typically $100°C$. The conversion process is carried out for a time sufficient to produce the powder; usually this time is 0.1—10 minutes. Excessively long conversion times sometimes leads to compaction of this powder and should be avoided. It should be pointed out that application of shear to the admix of rubber and carbon black such as occurs in internal mixers, of the Banbury and IMI type, usually lead to the formation of a compacted stock in which the carbon black and rubber are well distributed. In such compacted stocks, the carbon black is also dispersed in the rubber on a microscale. When, however, the herein disclosed conditions are present rubber powders are formed.

The abrasive quality of the anti-tack agent such as carbon black may contribute to breakdown of the rubber particles. Similarly, apertures such as the slots found in the piston of the IMI machine may cause breakup of the particles and/or function to allow removal of the particles from the zone of their formation.

Rubber powders, according to the invention, were made in a 3 litre Nielander mixer according to US—A—3 623 703 and available from Schiesser AG of Switzerland. The mixer has a cylindrical steel chamber having a capacity of about 3 litres. A close-fitting round piston having several radial slots can be moved back and forth in the chamber with speeds ranging from approximately 0 to 5 m/minute. This piston can be simultaneously rotated at speeds up to 300 rpm. To make powder, the chamber is charged with rubber, anti-tack agent (such as carbon black) and any other desired ingredients, closed and the piston activated. Motion of the piston results in pumping of the rubber, anti-tack agent and other ingredients present from one side of the chamber to the other. This process results in repeated subdivision of the rubber into increasingly smaller particles which, as they are formed and through the accompanying mixing process, become coated with anti-tack agent. It is theorized that the rotary motion of the piston serves to distribute the rubber, anti-tack agent and other ingredients within the batch while the pumping action forces all of these components through the radial slots, thus subjecting them to a high level of relatively uniform shear. The heat generated by this mixing/shearing process is removed through the cooling system of the mixing machine. Cooling water at room temperature is run through various portions of the machine at rates of approximately 3—11 litres per minute. Under these conditions the temperature of the rubber/anti-tack agent charge during operation is slightly above the temperature at which it is added to the mixer.

## Example A

The aforedescribed mixer was charged with 1100 grams of SBR. The piston speed was set at 1.5—2 m/minutes and the rotation at 280 rpm. The rubber was premixed for one complete piston cycle. Then 504 grams of N 339 carbon black were added. Water flow to the cooling units at the chamber, back and front cover and the rotor was adjusted to rates of approximately 3/3/3 and 7 litres per minute, respectively. Mixing was then continued under these conditions for two minutes to produce a free flowing rubber powder.

Repetition of this procedure, under seemingly identical conditions, led to variable results. Sometimes powder was formed and some times compaction of the rubber stock occurred. The latter compacted material resembled that obtained with conventional mixing. These results are believed to be due to unintended variations in charging the rubber and carbon black anti-tack agent, and their assemblage in the chamber.

Examples B—J

A series of powder preparations is made varying carbon black type, rubber type, and the size of the rubber pieces in the premix stage. These variations are described in Table I. A standard procedure is used as follows: rubber of the indicated type, 1100 grams, is divided into rough cubes of the indicated size (on an edge). These cubes are combined with the carbon black of the indicated type, 504 grams, in an appropriately sized bag and tumbled at 25°C by hand to thoroughly mix the ingredients. The combined mixture is then charged to the above-described Nielander machine and processed under essentially the same conditions.

TABLE I

| Example | Carbon Black Type | Rubber, Type | Rubber Cube Size, mm |
|---------|-------------------|--------------|----------------------|
| B | N339 | SBR | 12.7 |
| C | N339 | SBR | 25.4 |
| D | N339 | SBR | 50.8 |
| E[1] | N339 | SBR | 12.7 |
| F | N110 | SBR | 12.7 |
| G | N990 | SBR | 12.7 |
| H | N339 | BR[2] | 12.7 |
| I | N339 | EPDM[3] | 12.7 |
| J | N339 | NR | 12.7 |

[1]   400 grams carbon black is used

[2]   Diene 55® available from The Firestone Tire & Rubber Company of Akron, Ohio

[3]   Epsyn 55® available from The Copolymer Corp., of Baton Rouge, LA.

Comparative Example K

The cooling rate for the rotor was increased by a factor of approximately two-fold over that in Example A. The piston speed and rotation rate were kept the same. Five hundred fifty grams of SBR was charged to the chamber of the Nielander machine and premixed for one complete piston cycle. Then 504 grams of carbon black was added and mixing was carried out for one minute. A rubber powder resulted. To this powder was added 275 grams of additional rubber. Mixing was continued for another 0.5 minute, then an additional portion of 275 grams of SBR was added, and mixing continued for 0.5 minutes. At this point the rubber/carbon black charge was compacted. Further mixing at a piston speed of 3—3.5 m/minutes for two or more minutes produced a fully compacted rubber whose temperature upon removal from the machine was 160°C.

It is clear from a comparison of the results of Example A and Example K that prolonged mixing of the rubber powder under conditions of high shear leads to compaction of the powder. Thus, it is seen that it is only necessary to subject the rubber/anti-tack agent aggregate to mechanical action for a period sufficient to produce powder. Typically, this period ranges from about 0.1—10 minutes. It may vary somewhat depending on the design of the equipment and conditions applied during the mechanical action.

To compare the performance of process stocks prepared from the rubber powder of this invention with stocks made by conventional processing, the powder prepared according to this invention was further mixed in a Brabender Plasticorder for two, four and eight minutes (120°C jacket temperature and 60 rpm) and the materials subsequently molded into 152.4 × 152.4 × 2.0 mm plaques. Stocks of identical composition were prepared from the same basic raw materials in the Brabender under essentially identical conditions using mixing times of six and eight minutes, respectively. Thse stocks were also molded into 152.4 × 152.4 × 2.0 mm plaques and radiation vulcanized along with the former plaques to a dose of 10 Mrad. The carbon black dispersion and physical properties of these plaques are shown in Table II. It should be noted that the stocks made from the powder and mixed for four minutes had essentially identical carbon black dispersion and physical properties, that is modulus, tensile strength and energy to break, as those of stocks prepared from raw ingredients using a total mixing time of eight minutes.

## TABLE II

### PHYSICAL PROPERTIES OF COMPOUND MADE UP OF 100 PHR SBR CONTAINING 37.5 WT % AROMATIC OIL AND 73 PHR CARBON BLACK (N339)

|  | Mixing Time (min) | Carbon Black Dispersion (%) | 300% M (MPa) | B (MPa) | EB3 (MJ/m) |
|---|---|---|---|---|---|
| Prepared | 2 | 55 | 3.4 | 6.0 | 16.0 |
| from Powder | 4 | 86 | 3.1 | 6.8 | 20.2 |
|  | 8 | 93 | 2.5 | 7.8 | 28.4 |
| Prepared | 6 | 85 | 3.9 | 6.9 | 19.6 |
| from Raw | 8 | 91 | 3.1 | 7.2 | 23.8 |
| Ingredients |  |  |  |  |  |

The powders of this invention can be shaped and vulcanized into a vareity of useful rubber articles using known techniques such as extrusion, molding and the like. Among the articles that can be made from the powders are tires, hoses, seals, cables, belts and similar goods.

## Claims

1. A direct method for producing substantially unvulcanized rubber powder having an average particle size of 0.1—10 mm which comprises first subdividing bale rubber into segments having a particle size of 0.2—20 cm and combining them with a anti-tack agent which is a rubber filler or reinforcing agent selected from the group consisting of carbon black, zinc oxide, fine particles of precipitated calcium carbonate, fine and hard clay particles, calcium silicate silica, hydrated silica and finely divided phenolic resin, to form a homogeneous aggregate which is then mixed under high shear conditions at a temperature above the glass transition temperature of the rubber for a time of 0.1—10 minutes and a temperature of 0—100°C, wherein said mixing occurs in a single machine that subjects said segments of 0.2—20 cm to high shear conditions with a mixing and plasticating cylinder and a mixing and plasticating rotor with passages therein, the shaft of said rotor being connected to a rotary drive outside said cylinder and the cylinder and the rotor being axially movable in relation to each other.

2. The method of claim 1 in which mixing is carried out until the rubber powder has an average particle size of 0.1—10 mm.

3. The method of claim 2 wherein the premixing is carried out in said machine.

4. The method of claim 3 where the rubber segments are subjected to cutting, shear and/or abrasive forces to produce the powder.

5. A cured rubber composition made from the rubber powder of any one of claims 1 to 4.

6. An article of manufacture made from a cured rubber composition made from the rubber powder of any one of claims 1 to 4.

## Patentansprüche

1. Direktes Verfahren zur Herstellung von im wesentlichen unvulkanisiertem Kautschukpulver mit einer mittleren Teilchengröße von 0,1—10 mm, dadurch gekennzeichnet, daß man zuerst Ballenkautschuk zu Segmenten mit einer Teilchengröße von 0,2—20 cm unterteilt und sie mit einem Antiklebrigkeitsmittel, nämlich einem Kautschukfüllstoff oder -verstärkungsmittel ausgewählt aus der Gruppe bestehend aus Ruß, Zinkoxid, feinen Teilchen von ausgefälltem Kalciumcarbonat, feinen und harten Tonteilchen, Kalciumsilikat, Siliciumdioxid, hydratisiertem Siliciumdioxide und feinverteiltem Phenolharz, kombiniert, um ein homogenes Aggregat zu bilden, das sodann unter Hochscherbedingungen bei einer Temperatur oberhalb der Glasübergangstemperatur des Kautschuks über einen Zeitraum von 0,1—10 Minuten und bei einer Temperatur von 0—100°C vermischt wird, wobei das genannte Mischen in einer einzigen Maschine erfolgt, die die genannten Segmente von 0,2—20 cm Hochscherbedingungen mit einem Misch- und Plastifizierungszylinder und einem Misch- und Plastifizierungsrotor mit darin befindlichen Passagen unterwirft, wobei die Welle des genannten Rotors mit einem Drehantrieb außerhalb des genannten Zylinders verbunden ist und der Zylinder und der Rotor bezüglich zueinander axial bewegbar sind.

2. Verfahren nach Anspruch 1, dadurch gekennzeichnet, daß man das Mischen durchführt, bis das Kautschukpulver eine mittlere Teilchengröße von 0,1—10 mm aufweist.

3. Verfahren nach Anspruch 2, dadurch gekennzeichnet, daß man das Vormischen in der genannten Maschine durchführt.

4. Verfahren nach Anspruch 3, dadurch gekennzeichnet, daß man die Kautschuksegmente Schneid-, Scher- und/oder Abriebkräften unterwirft, um das Pulver herzustellen.

5. Gehärtete bze. vulkanisierte Kautschukmasse hergestellt aus dem Kautschukpulver nach einen der Ansprüche 1 bis 4.

6. Fabrikat hergestellt aus einer vulkanisierten bzw. gehärteten Kautschukmasse, hergestellt aus dem Kautschukpulver nach einem der Ansprüche 1 bis 4.

**Revendications**

1. Procédé direct de production de caoutchouc en poudre principalement non vulcanisé en particules de diamètre moyen de 0,1 à 10 mm, qui consisté à subdiviser tout d'abord du caoutchouc en balles en segments d'un diamètre de 0,2 à 20 cm et à mélanger ensuite les segments avec un agent anti-adhésif qui est une charge pour caoutchouc ou un agent de renforcement choisi dans le groupe comprenant le noir de carbone, l'oxyde de zinc, de fines particules de carbonate de calcium précipité, des particules d'argile fine et dure, du silicate de calcium, de la silice, de la silice hydratée etune résine phénolique finement divisée, pour former un agrégat homogène qui est ensuite mélangé dans des conditions de fort cisaillement à une température supérieure à la température de transition vitreuze du caoutchouc pendant une durrée de 0,1 à 10 minutes et à une température de 0 à 100°C, ledit mélange étant effectué dans une seule et même machine qui soument lesdits segments de 0,2 à 20 cm à des conditions de fort cisaillement avec un cylindre mélangeur et plastifiant et un rotor mélangeur et plastifiant présentant des passages, l'arbre dudit rotor étant relié à une mécanisme d'entraînement en rotation extérieur audit cylindre et ce dernier et le rotor pouvant être déplacés axialement l'un par rapport à l'autre.

2. Procédé suivant la revendication 1, dans lequel le malaxage est effectué jusqu'à ce que le caoutchouc en poudre ait un diamètre moyen des particules de 0,1 à 10 mm.

3. Procédé suivant la revendication 2, dans lequel le prémalaxage est effectué dans ladite machine.

4. Procédé suivant la revendication 3, dans lequel les segments de caoutchouc sont soumis à un découpage, à un cisaillement et/ou à des forces d'abrasion pour produire la poudre.

5. Composition de caoutchouc vulcanisée, préparée à partir du caoutchouc en poudre suivant l'une quelconque des revendications 1 à 4.

6. Article manufacturé produit à partir d'une composition de caoutchouc vulcanisée obtenue à partir du caoutchouc en poudre suivant l'une quelconque des revendications 1 à 4.